# EUROPÄISCHE PATENTSCHRIFT

(11) **EP 1 660 302 B1**
(45) Veröffentlichungstag und Bekanntmachung des Hinweises auf die Patenterteilung: **11.02.2015**
(21) Anmeldenummer: 04762728.6
(22) Anmeldetag: 30.08.2004
(51) Int. Cl.: B29C 49/58, B29C 49/12

(54) **VERFAHREN UND VORRICHTUNG ZUR BLASFORMUNG VON WERKSTÜCKEN MIT EINEM BLASRECKDORN MIT SPEZIELLEN LUFTZUFÜHRUNGSÖFFNUNGEN**
METHOD AND DEVICE FOR BLOW MOLDING WORKPIECES BY MEANS OF A BLOWING-STRETCHING MANDREL HAVING SPECIAL AIR DELIVERY PORTS
PROCEDE ET DISPOSITIF DE MOULAGE PAR SOUFFLAGE DE PIECES A L'AIDE D'UNE BROCHE D'ETIRAGE PAR SOUFFLAGE POURVUE D'ORIFICES D'AMENEE D'AIR SPECIAUX

(30) Priorität: 05.09.2003 DE 10340915
(43) Veröffentlichungstag der Anmeldung: 31.05.2006
(73) Patentinhaber: KHS Corpoplast GmbH, 22145 Hamburg (DE)
(72) Erfinder: JAKSZTAT, Wolf, 22547 Hamburg (DE); GODAU, Günther, 22145 Hamburg (DE)
(74) Vertreter: Hausfeld, Norbert
(86) Internationale Anmeldenummer: PCT/DE2004/001915
(87) Internationale Veröffentlichungsnummer: WO 2005/023519

(56) Entgegenhaltungen:
- US-A- 3 305 890
- US-A- 5 182 122
- US-A1- 2003 011 109
- PATENT ABSTRACTS OF JAPAN Bd. 014, Nr. 256 (M-0980), 4. Juni 1990 (1990-06-04) & JP 02 072929 A (MITSUBISHI PLASTICS IND LTD), 13. März 1990 (1990-03-13)

## Beschreibung

Die Erfindung betrifft ein Verfahren zur Blasformung von Behältern, bei dem ein Vorformling nach einer thermischen Konditionierung innerhalb einer Blasform von einer Reckstange gereckt und durch Blasdruckeinwirkung in den Behälter umgeformt wird und bei dem unter Druck stehendes Gas durch die Reckstange hindurch in den Behälter eingeleitet wird, sowie bei dem das Druckgas zur Behälterformung aus einer Druckkammer heraus seitlich in einen Stangeninnenraum der Reckstange eingeleitet wird, wobei die Reckstange hinsichtlich einer Umgebung über Stangendichtungen abgedichtet wird, die in Richtung der Längsachse der Reckstange einen Druckraum begrenzen.

Die Erfindung betrifft darüber hinaus eine Vorrichtung zur Blasformung von Behältern, die mindestens eine Blasstation mit einer Blasform sowie mindestens einer Reckstange aufweist, sowie bei der die Reckstange an eine Versorgungseinrichtung zur Zufuhr von unter Druck stehendem Gas angeschlossen ist und bei der die Reckstange zwischen einer der Blasform zugewandten Reckstangenkuppe und einem der Blasform abgewandten Reckstangenende mindestens eine in einen Stangeninnenraum der Reckstange einmündende Durchgangsöffnung zur Zuführung des unter Druck stehenden Gases zur Blasformung aufweist, wobei die Reckstange hinsichtlich einer Umgebung über Stangendichtungen abgedichtet ist, die in Richtung der Längsachse der Reckstange einen Abstand zueinander aufweisen und einen Druckraum begrenzen.

Die Erfindung betrifft außerdem eine Reckstange für eine derartige Vorrichtung zur Blasformung von Behältern mit einer Druckkammer für das Zuführen von Druckluft zur Reckstange, wobei die Reckstange zwischen einer Reckstangenkuppe und einem der Reckstangenkuppe abgewandten Reckstangenende mindestens eine in einen Stangeninnenraum der Reckstange einmündende Durchgangsöffnung zur Zuführung des unter Druck stehenden Gases zur Blasformung aufweist.

Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert.

Der grundsätzliche Aufbau einer Blasstation zur Behälter-formung wird in der DE-OS 42 12 583 beschrieben. Möglichkeiten zur Temperierung der Vorformlinge werden in der DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Eine Handhabung von Behältern unter Verwendung von Übergaberädern wird beispielsweise in der DE-OS 199 06 438 bei einer Anordnung des Übergaberades zwischen einem Blasrad und einer Ausgabestrecke beschrieben.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander ver-schiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Eine detaillierte Beschreibung eines Recksystems einer Blasstation mit zugeordneter Reckstange erfolgt in der DE-OS 101 45 579. Die Reckstange ist hier als ein massiver Stab ausgebildet und die Blasluft wird der Blasform durch einen Anschlußkolben hindurch zugeführt, der einen größeren Innendurchmesser aufweist, als der Außendurchmesser der Reckstange beträgt. Hierdurch wird zwischen der Reckstange und einer Innenfläche des Anschlußkolbens ein Ringspalt bereitgestellt, durch den das unter Druck stehende Gas hindurchströmen kann.

Die Verwendung einer hohlen Reckstange ist beispielsweise aus der DE-OS 28 14 952 bekannt. Ein Anschluß für das unter Druck stehende Gas erfolgt hier über ein einer Reckstangenkuppe abgewandtes Ende der rohrartig ausgebildeten Reckstange. Eine Druckgaszuführung über das Ende einer hohlen Reckstange wird darüber hinaus in der DE 34 08 740 C2 beschrieben.

Aus der US 5,182,122 A ist bereits eine hohle Reckstange bekannt, die einen koaxialen Aufbau mit zwei Strömungskanälen besitzt. Durch den inneren Kanal wird flüssiger Stickstoff und durch den äußeren Kanal warme Isolationsluft in den geblasenen Behälter eingeleitet. Eine Zufuhr von Blasluft erfolgt außenseitig entlang der Reckstange durch einen die Reckstange umgebenden Ringspalt hindurch. Anschlüsse für die warme Isolationsluft und den flüssigen Stickstoff sind an einem der Blasform abgewandten Ende der Reckstange angeordnet.

Aus den Patent abstracts of Japan Bd. 014, Nr. 256(M-980), 4. Juni 1990 (1990-06-04) & JP 02 072929 0A (Mitsubishi Plastics Ind Ltd) 13. März 1990 (1990-03-13) ist es bereits gemäß den Oberbegriffen der Patentansprüche 1, 4 und 12 bekannt, eine Reckstange mit einem seitlichen Einlaß für Spülluft zu versehen, die im Anschluß an eine Blasformung des Behälters zur Unterstützung einer Thermostabiliserung des Behälters in diesen hinein und durch ein Auslaßventil im Rahmen eines Spülvorganges wieder herausgeleitet wird.

Die bekannten Druckgaszuführungen können bislang noch nicht alle Anforderungen gemeinsam erfüllen, die bei ständig zunehmenden Produktionsraten gestellt werden. Die für eine Druckluftversorgung am Ende der Reckstangen angeordneten Schläuche neigen aufgrund der durch die Bewegungen der Reckstange hervorgerufenen ständig wiederkehrenden Biegebeanspruchungen zu Rissen, bei einer Druckgaszuführung durch einen die Reckstange umgebenden Spalt wird lediglich eine vergleichsweise kleine Querschnittfläche bereitgestellt.

Aufgabe der vorliegenden Erfindung ist es, ein Verfahren der einleitend genannten Art derart anzugeben, daß eine verbesserte Belastungsfähigkeit bei gleichzeitig günstigen Strömungseigenschaften bereitgestellt wird.

Diese Aufgabe wird erfindungsgemäß dadurch gelöst, daß das Druckgas über eine Mehrzahl von Durchgangsöffnungen in den Stangeninnenraum eingeleitet wird, wobei die Durchgangsöffnungen sowohl entlang eines Umfangs der Reckstange als auch in Richtung einer Längsachse der Reckstange verteilt sind, sowie dass die Reckstange mit ihren Durchgangsöffnungen im Bereich einer Druckkammer positionierbar geführt ist.

Weitere Aufgabe der vorliegenden Erfindung ist es, eine Vorrichtung der einleitend genannten Art derart zu konstruieren, daß ein kompakter Aufbau, eine lange Betriebsfähigkeit sowie günstige Strömungseigenschaften bereitgestellt werden.

Diese Aufgabe wird erfindungsgemäß dadurch gelöst, daß die Reckstange im Bereich ihrer Seitenwandung eine Mehrzahl von Durchgangsöffnungen aufweist, die sowohl entlang eines Umfangs der Reckstange als auch in Richtung einer Längsachse der Reckstange verteilt angeordnet sind, und dass die Reckstange mit ihren Durchgangsöffnungen im Bereich einer Druckkammer positionierbar geführt ist.

Diese Aufgabe wird erfindungsgemäß außerdem gelöst durch eine Reckstange der eingangs genannten Art für eine erfindungsgemäße Vorrichtung, die dadurch weitergebildet ist, dass die Reckstange im Bereich ihrer Seitenwandung eine Mehrzahl von Durchgangsöffnungen aufweist, die sowohl entlang eines Umfangs der Reckstange als auch in Richtung einer Längsachse der Reckstange verteilt angeordnet sind, und dass die Reckstange in einer Gebrauchsstellung mit ihren Durchgangsöffnungen im Bereich der Druckkammer der Vorrichtung positionierbar geführt werden kann.

Durch die Verwendung einer seitlich zur Reckstange angeordneten Druckkammer und die Zufuhr des unter Druck stehenden Gases seitlich in einen Innenraum der Reckstange hinein werden bewegliche Schlauchanschlüsse vermieden. Die Druckkammer kann über Rohre oder Schläuche an eine Druckgasversorgung angeschlossen werden, ohne daß eine Relativbewegung der Bauteile zueinander während des Produktionsprozesses durchgeführt wird. Aufgrund der Zuführung des Druckgases durch die Reckstange hindurch kann das unter Druck stehende Gas über Ausströmöffnungen der Reckstange gezielt in auszuwählende Bereiche des zu formenden Behälters eingeleitet werden.

Eine Anwendung bei Standardmaschinen zur Behälterformung kann dadurch erfolgen, daß ein zur Blasverformung der Behälter vorgesehenes Gas in den Stangeninnenraum eingeleitet wird.

Bei der Herstellung von temperaturstabilen Behältern ist insbesondere daran gedacht, dass ein Spülgas in den Stangeninnenraum eingeleitet wird.

Bei der Blasformung von wärmestabilen Behältern erweist es sich insbesondere als vorteilhaft, dass das Druckgas nach einer Formung des Behälters und vor einer Entnahme aus der Blasform in den Stangeninnenraum eingeleitet wird.

Zur Bereitstellung eines geringen Strömungswiderstandes wird vorgeschlagen, daß das Druckgas durch eine Mehrzahl von Durchgangsöffnungen hindurch in den Stangeninnenraum eingeleitet wird.

Eine räumlich kompakte Steuerung bei hoher Reproduktionsgenauigkeit der zeitlichen Steuerungsabläufe kann dadurch erreicht werden, daß die Zuführung des Druckgases in den Stangeninnenraum hinein von einem Magnetventil gesteuert wird.

Eine weitere Strömungsvergleichmäßigung kann dadurch erreicht werden, daß die Durchgangsöffnungen sowohl entlang eines Umfanges der Reckstange als auch in Richtung einer Längsachse der Reckstange verteilt angeordnet sind.

Zur Unterstützung einer preiswerten Fertigung bei gleichzeitiger Gewährleistung einer hohen Stabilität wird vorgeschlagen, daß sich der Reckstangeninnenraum ausgehend vom Bereich der Durchgangsöffnungen bis zur Reckstangenkuppe erstreckt und daß ein Bereich zwischen den Durchgangsöffnungen und einem Reckstangenende massiv ausgebildet ist. Alternativ kann die Reckstange aber auch als eine im Bereich eines Endes verschlossenes Rohr ausgebildet sein.

Eine kompakte Ausführungsform wird ebenfalls dadurch unterstützt, daß das Magnetventil sowie die Druckkammer blockartig miteinander verbunden sind.

Kurze Schaltzeiten können dadurch erreicht werden, daß das Magnetventil mit einem geringen Abstand zur Druckkammer angeordnet ist.

In den Zeichnungen sind Ausführungsbeispiele der Erfindung schematisch dargestellt. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Behältern,
- Fig. 4: eine modifizierte Heizstrecke mit vergrößerter Heizkapazität,
- Fig. 5: eine Seitenansicht einer Blasstation, bei der eine Reckstange von einem Reckstangenträger positioniert wird,
- Fig. 6: eine vergrößerte und teilweise geschnittene Darstellung eines oberen Bereiches der Reckstangenführung der Reckstange,
- Fig. 7: eine vergrößerte Darstellung der Einzelheit VII in Fig. 6,
- Fig. 8: eine vergrößerte Darstellung der Einzelheit VIII in Fig. 6,
- Fig. 9: einen Horizontalschnitt gemäß Blickrichtung IX-IX in Fig. 6 und
- Fig. 10: eine Ausführungsform mit beweglicher Dichthülse.

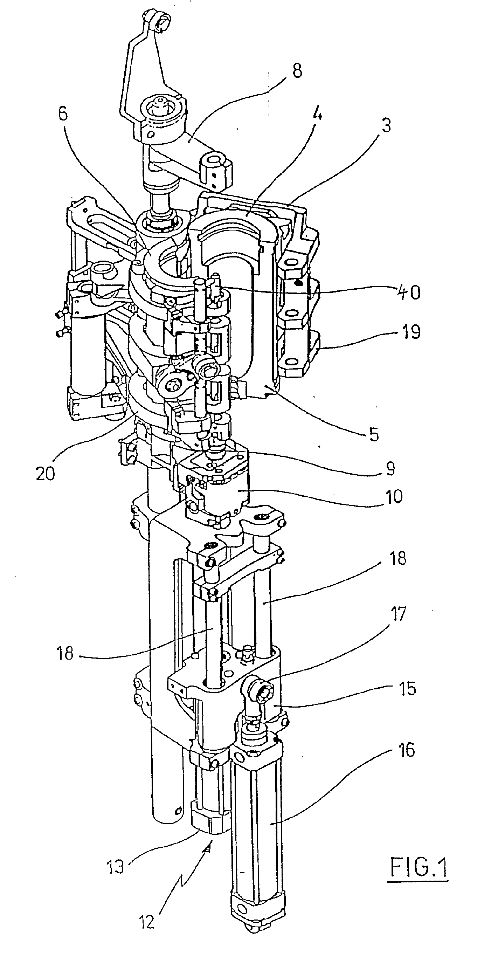

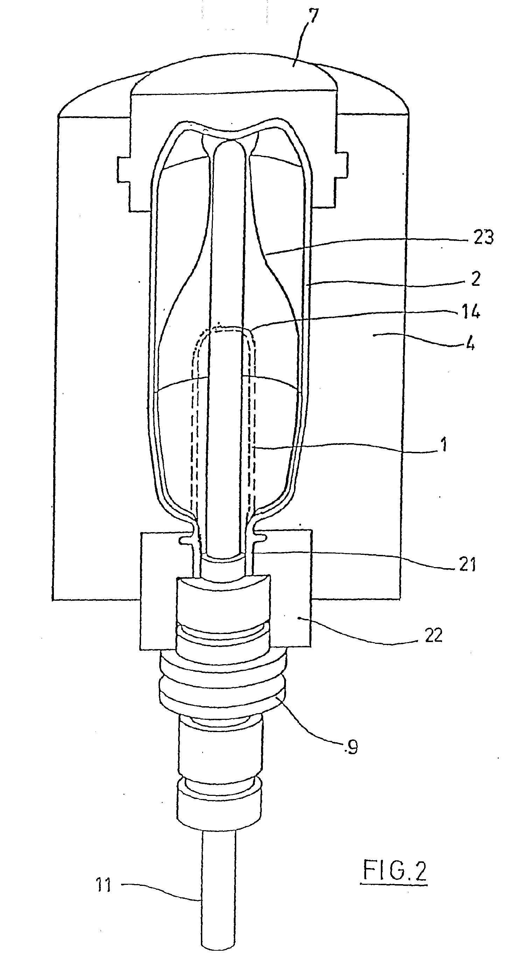

Der prinzipielle Aufbau einer Vorrichtung zur Umformung von Vorformlingen (1) in Behälter (2) ist in Fig. 1 und in Fig. 2 dargestellt.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt bei diesem Ausführungsbeispiel mit Hilfe einer Reckstange (11), die von einem Zylinder (12) positioniert wird. Gemäß einer anderen Ausführungsform wird eine mechanische Positionierung der Reckstange (11) über Kurvensegmente durchgeführt, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind.

Bei der in Fig. 1 dargestellten Ausführungsform ist das Recksystem derart ausgebildet, daß eine Tandem-Anordnung von zwei Zylindern (12),bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durch-führung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (20).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

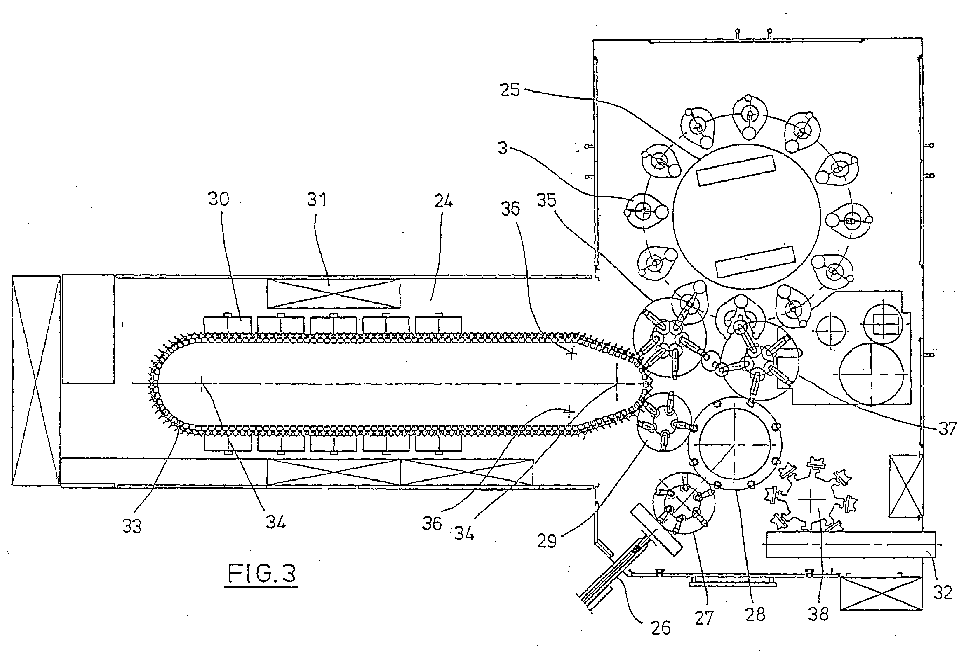

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die Vor-formlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, daß der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesent-lichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

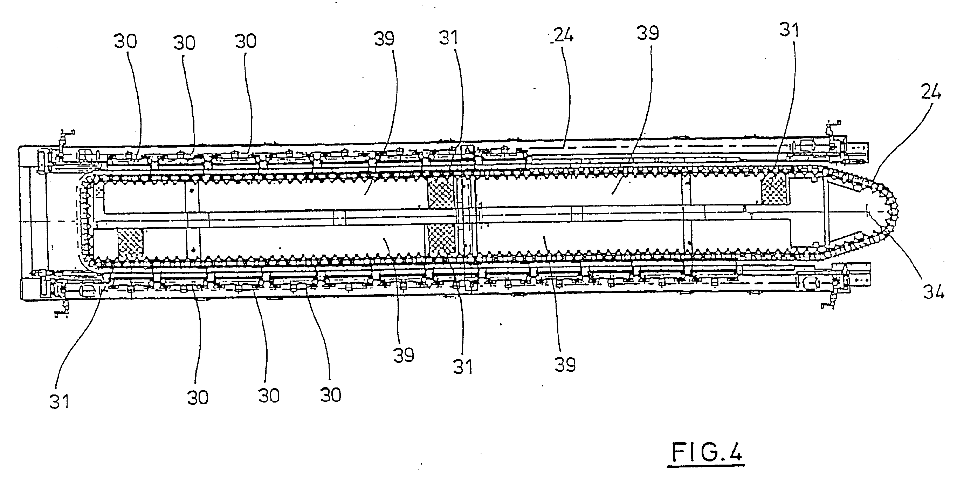

In der in Fig. 4 dargestellten modifizierten Heizstrecke (24) können durch die größere Anzahl von Heizstrahlern (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

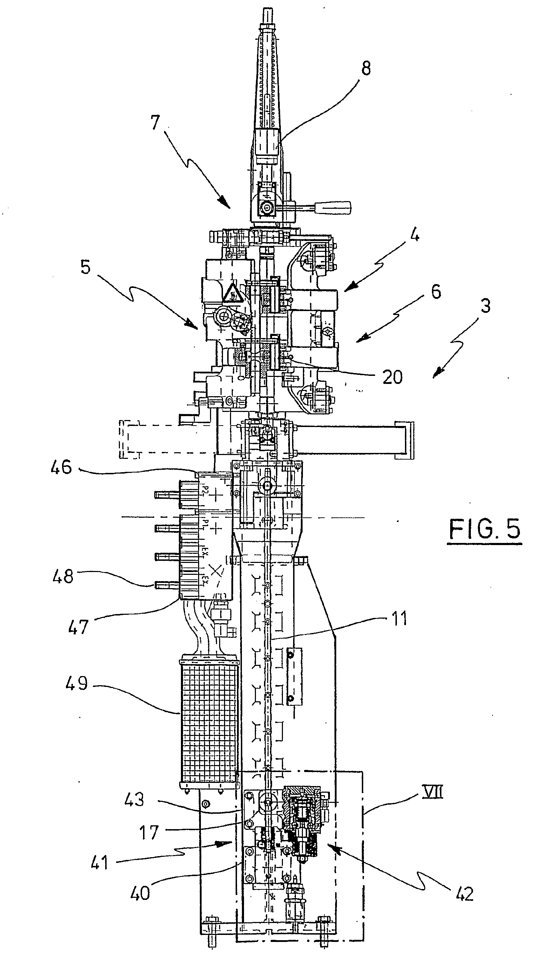

Fig. 5 zeigt eine gegenüber der Darstellung in Fig. 1 abgewandelte Darstellung der Blasstation (3) bei einer Blickrichtung von vorne. Insbesondere ist aus dieser Darstellung erkennbar, daß die Reckstange (11) von einem Reckstangen-träger (41) gehaltert ist, der aus einem Trägersockel (40) und einem über ein Kupplungselement (42) mit dem Trägersockel (40) verbundenen Rollenträger (43) ausgebildet ist. Der Rollenträger (43) haltert die Führungsrolle (17), die zur Positionierung des Recksystems dient. Die Führungsrolle (17) wird entlang einer nicht dargestellten Kurvenbahn geführt. Es ist hier eine vollständige mechanische Steuerung des Reckvorganges realisiert.

Das in Fig. 5 veranschaulichte Kupplungselement (42) kann auch bei der Ausführungsform gemäß Fig. 1 zur Ermöglichung einer vollständigen mechanischen Entkopplung der Zylinder (12) voneinander bzw. von einem Tragelement für die Führungsrolle (17) eingesetzt werden.

Fig. 5 veranschaulicht einen eingerasteten Zustand des Kupplungselementes (42), in dem der Trägersockel (40) und der Rollenträger (43) miteinander durch das Kupplungselement (42) verbunden sind. Es liegt hierdurch eine starre mechanische Kopplung vor, die dazu führt, daß eine Positionierung der Führungsrolle (17) direkt und unmittelbar in eine Positionierung der Reckstange (11) umgesetzt wird. Es liegt hierdurch in jedem Bewegungszustand des Blasrades (25) eine exakt vorgegebene Positionierung der Reckstange (11) vor und die Positionierung der Reckstange (11) wird bei einer Mehrzahl von auf dem Blasrad (25) angeordneten Blasstationen (3) bei jeder Blasstation (3) exakt reproduziert. Diese exakte mechanische Vorgabe der Positionierung der Reckstange (11) trägt zu einer hohen Produktqualität sowie zu einer hohen Gleichmäßigkeit der hergestellten Behälter (2) bei.

Fig. 5 zeigt ebenfalls die Anordnung eines Pneumatikblockes (46) zur Blasdruckversorgung der Blasstation (3). Der Pneumatikblock (46) ist mit Hochdruckventilen (47) ausgestattet, die über Anschlüsse (48) an eine oder mehrere Druckversorgungen angeschlossen werden können. Nach einer Blasformung der Behälter (2) wird in eine Umgebung abzuleitende Blasluft wird über den Pneumatikblock (46) zunächst einem Schalldämpfer (49) zugeführt.

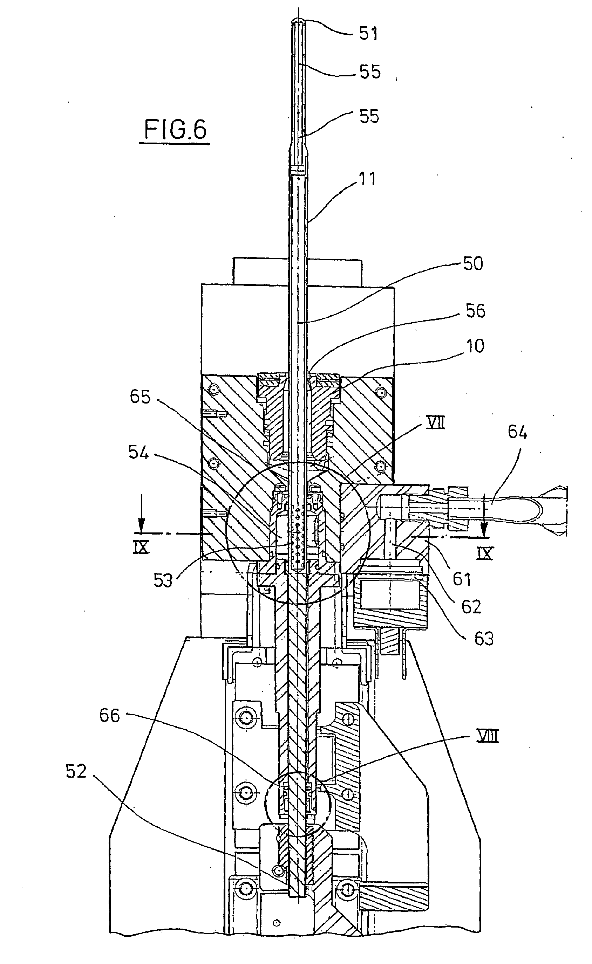

Fig. 6 veranschaulicht, daß die Reckstange (11) mit einem Stangeninnenraum (50) versehen ist, in den Durchgangsöffnungen (53) einmünden, die in einem zwischen einer Reckstangenkuppe (51) und einem der Reckstangenkuppe (51) abgewandt angeordneten Reckstangenende (52) positioniert sind. Bei der in Fig. 6 veranschaulichten Positionierung der Reckstange (10) stellen die Durchgangsöffnungen (53) eine Verbindung zwischen dem Stangeninnenraum (50) und einer Druckkammer (54) her.

Im Bereich eines der Reckstangenkuppe (51) zugewandten Bereiches der Reckstange (11) sind Ausströmöffnungen (55) positioniert. Bei dem in Fig. 6 dargestellten Ausführungsbeispiel erstreckt sich im Bereich des Anschlußkolbens (10) um die Reckstange (11) herum ein Ringspalt (56), so daß bei dieser Ausführungsform eine Druckgaszuführung sowohl durch den Stangeninnenraum (50) als auch durch den Ringspalt (56) hindurch erfolgen kann.

Im Bereich eines Ventilblockes (61) ist ein Zufuhrkanal angeordnet, der ein Steuerventil (63) mit einer Gaszuführung (64) verbindet. Über das Steuerventil (63) wird die Gaszufuhr zur Druckkammer (54) gesteuert.

Eine Abdichtung der Reckstange (11) hinsichtlich einer Umgebung erfolgt über Stangendichtungen (65, 66). Innerhalb des von den Stangendichtungen (65, 66) begrenzten Druckraumes ist eine abgedichtete Führung des mit den Durchgangsöffnungen (53) versehenen Bereiches der Reckstange (11) möglich.

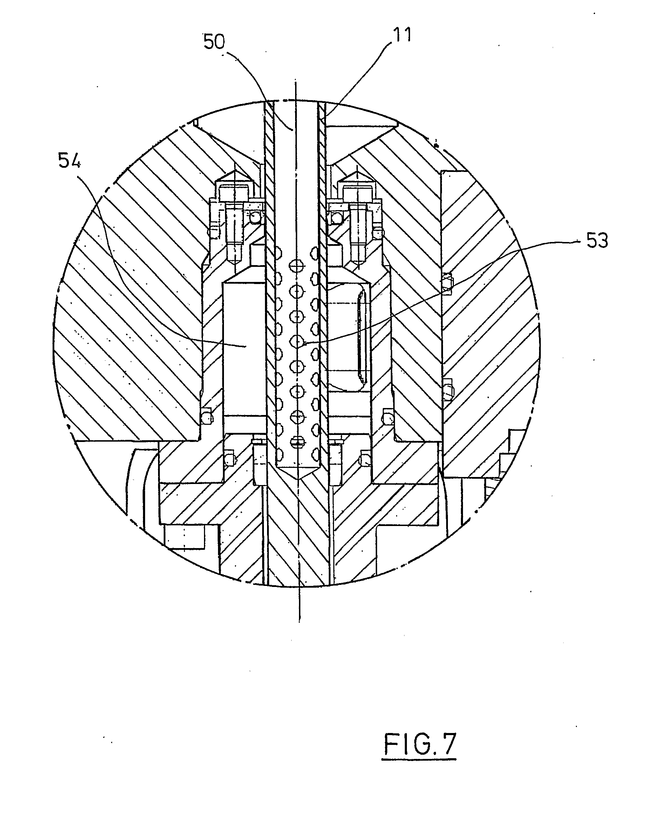

Aus Fig. 7 ist der Aufbau der Reckstange (11) im Bereich der Durchgangsöffnungen (53) sowie die konstruktive Gestaltung der Druckkammer (54) in einer vergrößerten Darstellung zu erkennen. Die Durchgangsöffnungen (53) sind beim dargestellten Ausführungsbeispiel in Richtung einer Längsachse (57) der Reckstange (11) reihenartig hintereinander angeordnet. Mehrere derartige Reihen sind entlang des Umfanges der Reckstange (11) relativ zueinander mit einem Abstand angeordnet. Insbesondere ist daran gedacht, die gebildeten Reihen in Richtung der Längsachse (57) derart relativ zueinender versetzt anzuordnen, daß ein Versatz um die hälfte eines Mittellinienabstandes der Durchgangsöffnungen (53) vorliegt. Hierdurch werden die Durchgangsöffnungen (53) einer Reihe von Durchgangsöffnungen (53) jeweils im Schwerpunkt von rechteckförmigen Bezugsflächen angeordnet, die von jeweils zwei Durchgangsöffnungen (53) benachbarter Reihen aufgespannt werden. Diese Anordnung unterstützt eine gleichmäßige Strömung.

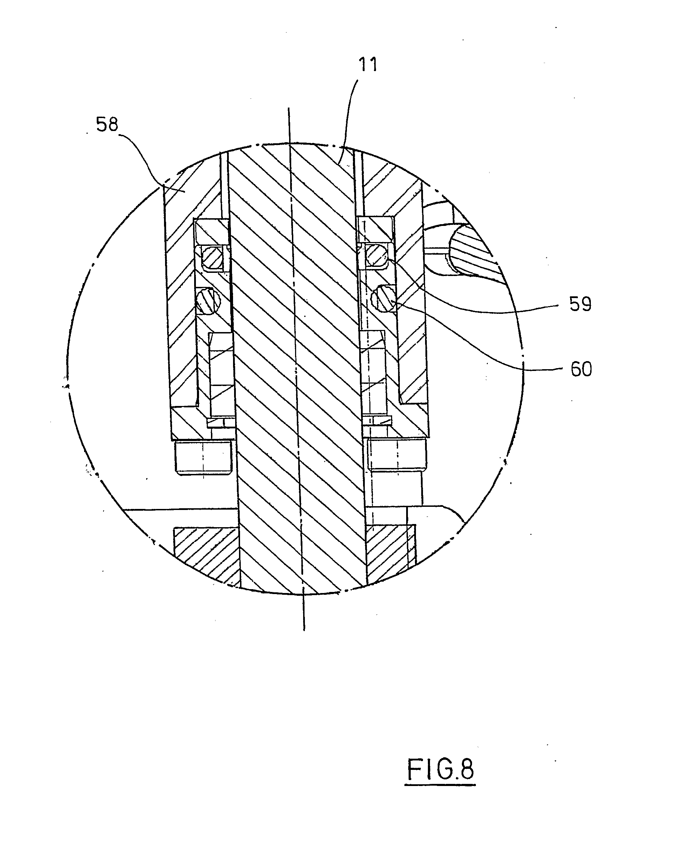

Aus der vergrößerten Darstellung in Fig. 8 ist die abgedichtete Führung der Reckstange (11) im Bereich eines Trägers (58) zu erkennen. Es werden hierzu Dichtungen (59, 60) verwendet, wobei die Dichtung (59) als Stangendichtung und die Dichtung (60) als O-Ring ausgebildet sein kann. Eine Stangendichtung besteht aus einem harten Ring und einen O-Ring aus Weichmetall.

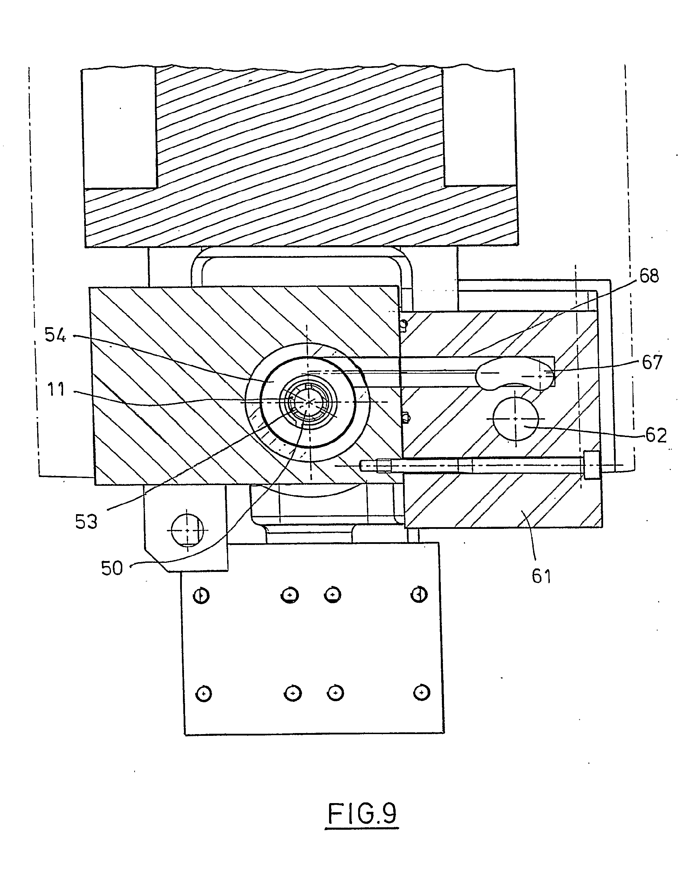

Fig. 9 veranschaulicht den konstruktiven Aufbau in einem Horizontalschnitt. Es ist insbesondere die blockartige Ausbildung und gegenseitige Verbindung der einzelnen Vorrichtungskomponenten zu erkennen.

Aus Fig. 9 ist insbesondere der Verlauf eines vom Steuerventil (63) ausgehenden Vertikalkanals (67) sowie der Verlauf eines zur Druckkammer (54) führenden Querkanals (68) zu erkennen. Darüber hinaus ist zu erkennen, daß auf einer jeweiligen Ebene der Reckstange (11) drei relativ zueinander äquidistant angeordnete Durchgangsöffnungen (53) positioniert sind. Diese Anordnung weist den Vorteil auf, daß einander gegenüberliegende Durchgangsöffnungen vermieden werden.

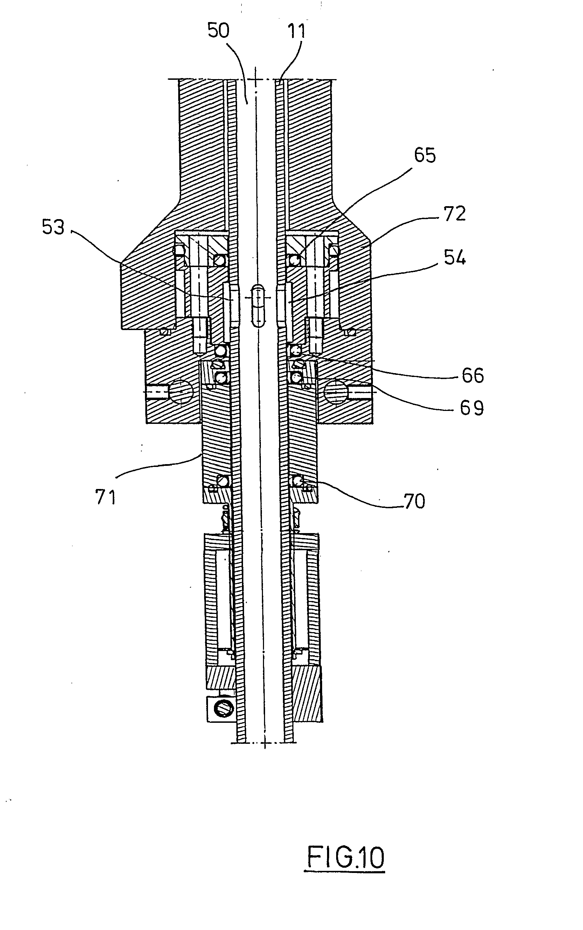

Fig. 10 zeigt eine gegenüber der Darstellung in Fig. 6 abgewandelte Ausführungsform. Die Stangendichtungen (65, 66) sind hier mit einem relativ geringen Abstand zur Druckkammer (54) angeordnet. Weitere Stangendichtungen (69, 70) sind im Bereich eines buchsenförmigen Verschlußstückes (71) angeordnet, das zumindest bereichsweise gemeinsam mit der Reckstange (11) positionierbar ist. Bei der in Fig. 10 dargestellten Positionierung ist das Verschlußstück (71) gegen ein Kammergehäuse (72) der Druckkammer (54) gefahren.

Bei einer Positionierung der Reckstange (11) mit den Durchgangsöffnungen (53) aus der Druckkammer (54) heraus wird der Reckstangenbereich mit den Durchgangsöffnungen (53) zunächst zwischen die Stangendichtungen (69, 70) verfahren. Bei einer weiteren Abwärtsbewegung der Reckstange (11) wird eine Arretierung des Verschlußstückes gelöst und eine weitere Abwärtsbewegung der Reckstange (11) erfolgt gemeinsam mit dem Verschlußstück (71), so daß die Durchgangsöffnungen (53) gegenüber einer Umgebung abgedichtet sind. Die entsprechende Verwendung eines beweglichen Verschlußstückes (71) ermöglicht eine sehr kompakte Konstruktion des Kammergehäuses (72).

## Patentansprüche

1. Verfahren zur Blasformung von Behältern (2), bei dem ein Vorformling (1) nach einer thermischen Konditionierung innerhalb einer Blasform (4) von einer Reckstange (11) gereckt und durch Blasdruckeinwirkung in den Behälter (2) umgeformt wird und bei dem unter Druck stehendes Gas durch die Reckstange (11) hindurch in den Behälter (2) eingeleitet wird, sowie bei dem das Druckgas zur Behälterformung aus einer Druckkammer (54) heraus seitlich in einen Stangeninnenraum (50) der Reckstange (11) eingeleitet wird, wobei die Reckstange (11) hinsichtlich einer Umgebung über Stangendichtungen (65, 66) abgedichtet wird, die in Richtung der Längsachse der Reckstange (11) einen Druckraum begrenzen, **dadurch gekennzeichnet, dass** das Druckgas über eine Mehrzahl von Durchgangsöffnungen (53) in den Stangeninnenraum (50) eingeleitet wird, wobei die Durchgangsöffnungen (53) sowohl entlang eines Umfangs der Reckstange (11) als auch in Richtung einer Längsachse (57) der Reckstange (11) verteilt sind, sowie dass die Reckstange (11) mit ihren Durchgangsöffnungen (53) im Bereich einer Druckkammer (54) positionierbar geführt ist.

2. Verfahren nach Anspruch 1, **dadurch gekennzeichnet, daß** das Druckgas nach einer Formung des Behälters (2) und vor einer Entnahme aus der Blasform (4) in den Stangeninnenraum (50) eingeleitet wird.

3. Verfahren nach einem der Ansprüche 1 oder 2, **dadurch gekennzeichnet, daß** die Zuführung des Druckgases in den Stangeninnenraum (50) hinein von einem Magnetventil gesteuert wird.

4. Vorrichtung zur Blasformung von Behältern (2), die mindestens eine Blasstation (3) mit mindestens einer Blasform (4) sowie mindestens einer Reckstange (11) aufweist sowie bei der die Reckstange (11) an eine Versorgungseinrichtung zur Zufuhr von unter Druck stehendem Gas angeschlossen ist, und bei der die Reckstange (11) zwischen einer der Blasform (4) zugewandten Reckstangenkuppe (51) und einem der Blasform (4) abgewandten Reckstangenende (52) mindestens eine in einen Stangeninnenraum (50) der Reckstange (11) einmündende Durchgangsöffnung (53) zur Zuführung des unter Druck stehenden Gases zur Blasformung aufweist, wobei die Reckstange (11) hinsichtlich einer Umgebung über Stangendichtungen (65, 66) abgedichtet ist, die in Richtung der Längsachse der Reckstange (11) einen Abstand zueinander aufweisen und einen Druckraum begrenzen, **dadurch gekennzeichnet, dass** die Reckstange (11) im Bereich ihrer Seitenwandung eine Mehrzahl von Durchgangsöffnungen (53) aufweist, die sowohl entlang eines Umfangs der Reckstange (11) als auch in Richtung einer Längsachse (57) der Reckstange (11) verteilt angeordnet sind, und dass die Reckstange (11) mit ihren Durchgangsöffnungen (53) im Bereich einer Druckkammer (54) positionierbar geführt ist.

5. Vorrichtung nach Anspruch 4, **dadurch gekennzeichnet, daß** sich der Reckstangeninnenraum (50) ausgehend vom Bereich der Durchgangsöffnungen (53) bis zur Reckstangenkuppe (51) erstreckt und daß ein Bereich zwischen den Durchgangsöffnungen (53) und einem Reckstangenende (52) massiv ausgebildet ist.

6. Vorrichtung nach einem der Ansprüche 4 oder 5, **dadurch gekennzeichnet, daß** die Druckkammer (54) an ein Magnetventil zur Druckluftzuführung angeschlossen ist.

7. Vorrichtung nach einem der Ansprüche 4 bis 6, **dadurch gekennzeichnet, daß** das Magnetventil sowie die Druckkammer (54) blockartig miteinander verbunden sind.

8. Vorrichtung nach einem der Ansprüche 4 bis 7, **dadurch gekennzeichnet, daß** das Magnetventil mit einem geringen Abstand zur Druckkammer (54) angeordnet ist.

9. Vorrichtung nach einem der Ansprüche 4 bis 8, **dadurch gekennzeichnet, daß** zur mindestens zeitweisen Abdichtung der Durchgangsöffnungen (53) ein relativ zu einem Kammergehäuse der Druckkammer (54) beweglich angeordnetes Verschlußstück (71) vorgesehen ist.

10. Vorrichtung nach Anspruch 9, **dadurch gekennzeichnet, daß** das Verschlußstück (71) die Reckstange (11) bereichsweise hülsenförmig umgibt.

11. Vorrichtung nach Anspruch 9 oder 10, **dadurch gekennzeichnet, daß** das Verschlußstück (71) mit mindestens zwei Stangendichtungen (69, 70) zur Bereitstellung eines abgedichteten Bereiches versehen ist.

12. Reckstange für eine Vorrichtung zur Blasformung von Behältern (2) gemäß einem der Ansprüche 4 bis 11 mit einer Druckkammer (54) für das Zuführen von Druckluft zur Reckstange (11), wobei die Reckstange (11) zwischen einer Reckstangenkuppe (51) und einem der Reckstangenkuppe (51) abgewandten Reckstangenende (52) mindestens eine in einen Stangeninnenraum (50) der Reckstange (11) einmündende Durchgangsöffnung (53) zur Zuführung des unter Druck stehenden Gases zur Blasformung aufweist, **dadurch gekennzeichnet, dass** die Reckstange (11) im Bereich ihrer Seitenwandung eine Mehrzahl von Durchgangsöffnungen (53) aufweist, die sowohl entlang eines Umfangs der Reckstange (11) als auch in Richtung einer Längsachse (57) der Reckstange (11) verteilt angeordnet sind, und dass die Reckstange (11) in einer Gebrauchsstellung mit ihren Durchgangsöffnungen (53) im Bereich der Druckkammer (54) der Vorrichtung positionierbar geführt werden kann.

## Claims

1. A method for the blow moulding of containers (2) wherein, after having been conditioned thermally, a preform (1) is stretched by a stretch forming bar (11) in a blow mould (4) and is moulded in said blow mould (4) by the action of blowing pressure to form the container (2) and wherein pressurized gas is introduced through the stretch forming bar (11) and into the container (2) and wherein, to form the container, the compressed gas that is coming out of a pressure chamber is laterally introduced into an interior bar region (50) of the stretch forming bar (11), wherein the stretch forming bar (11) is sealed with respect to its environment via bar seals (65, 66) which delimit a pressure chamber in the direction of the longitudinal axis of the stretch forming bar (11),
**characterised in that**
- the compressed gas is introduced into the interior bar region (50) via a plurality of through openings (53), wherein the through openings (53) are distributed both along a circumference of the stretch forming bar (11) and in the direction of a longitudinal axis (57) of the stretch forming bar (11) and that the stretch forming bar (11) is guided such that it can be positioned in the area of a pressure chamber (54) with its through openings (53).

2. The method according to Claim 1, **characterised in that** the compressed gas is introduced into the interior bar region (50) subsequent to a forming of the container (2) and prior to a removal from the blow mould (4).

3. The method according to any one of Claims 1 or 2, **characterised in that** the supply of the compressed gas into the interior bar region (50) is controlled by means of a solenoid valve.

4. A device for the blow moulding of containers (2), the device comprising at least one blowing station (3) having at least one blow mould (4) as well as comprising at least one stretch forming bar (11) and wherein the stretch forming bar (11) is connected to a supply unit for supplying pressurized gas and wherein, between a stretch forming bar top end (51) that is facing the blow mould (4) and a stretch forming bar bottom end (52) that is facing away from the blow mould (4), the stretch forming bar (11) comprises at least one through opening (53) for supplying the pressurized gas for blow moulding purposes, said through opening (53) ending in an interior bar region (50) of the stretch forming bar (11), wherein the stretch forming bar (11) is sealed with respect to its environment via bar seals (65, 66) which are spaced apart from each other in the direction of the longitudinal axis of the stretch forming bar (11) and delimit a pressure chamber, **characterised in that** the stretch forming bar (11) comprises a plurality of through openings (53) in the area of its side wall, said through openings (53) being arranged such that they are distributed both along a circumference of the stretch forming bar (11) and in the direction of a longitudinal axis (57) of the stretch forming bar (11) and **characterised in that** the stretch forming bar (11) is guided such that it can be positioned in the area of a pressure chamber (54) with its through openings (53).

5. The device according to Claim 4, **characterised in that** the interior stretch forming bar region (50) extends from the area of the through openings (53) to the stretch forming bar top end (51) and that a region between the through openings (53) and a stretch forming bar bottom end (52) is formed in a solid manner.

6. The device according to any one of Claims 4 or 5, **characterised in that** the pressure chamber (54) is connected to a solenoid valve for compressed air supply.

7. The device according to any one of Claims 4 to 6, **characterised in that** the solenoid valve and the pressure chamber (54) are connected to each other in the manner of a block.

8. The device according to any one of Claims 4 to 7, **characterised in that** the solenoid valve is arranged such that it is spaced apart from the pressure chamber (54) by a small distance.

9. The device according to any one of Claims 4 to 8, **characterised in that** a locking piece is provided that is arranged such that it is movable in relation to a chamber housing of the pressure chamber (54), in order to seal the through openings (53) at least for certain periods of time.

10. The device according to Claim 9, **characterised in that** the locking piece (71) surrounds the stretch forming bar (11) in the form of a sleeve in certain regions.

11. The device according to Claim 9 or 10, **characterised in that** the locking piece (71) is provided with at least two bar seals (69, 70) in order to provide a sealed area.

12. A stretch forming bar for a device for the blow moulding of containers (2) according to any one of Claims 4 to 11, having a pressure chamber (54) for supplying compressed air to the stretch forming bar (11) wherein, between a stretch forming bar top end (51) and a stretch forming bar bottom end (52) that is facing away from the stretch forming bar top end (51), the stretch forming bar (11) comprises at least one through opening (53) for supplying the pressurized gas for blow moulding purposes, said through opening (53) ending in an interior bar region (50) of the stretch forming bar (11), **characterised in that** the stretch forming bar (11) comprises a plurality of through openings (53) in the area of its side wall, said through openings (53) being arranged such that they are distributed both along a circumference of the stretch forming bar (11) and in the direction of a longitudinal axis (57) of the stretch forming bar (11), and **characterised in that**, in a position of use, the stretch forming bar (11) can be guided such that it can be positioned in the area of the pressure chamber (54) of the device with its through openings (53).

## Revendications

1. Procédé de moulage par soufflage de récipients (2), dans le cadre duquel une préforme (1), après un conditionnement thermique, est étirée par une barre d'étirage (11) à l'intérieur d'un moule de soufflage (4) et, sous l'action d'une pression de soufflage, transformée en un récipient (2), et dans le cadre duquel un gaz sous pression est introduit à travers la barre d'étirage (11) dans le récipient (2), et dans le cadre duquel le gaz comprimé destiné à former le récipient et provenant d'une chambre de compression (54) est introduit latéralement dans un espace intérieur (50) de la barre d'étirage (11), celle-ci étant étanchéifiée par rapport au milieu qui l'entoure par des joints de barre (65, 66) qui délimitent un espace sous pression dans le sens de l'axe longitudinal de la barre d'étirage (11), **caractérisé en ce que** le gaz comprimé est introduit dans l'espace intérieur (50) de la barre d'étirage par une pluralité d'orifices de passage (53), ces orifices de passage (53) étant répartis aussi bien le long d'une périphérie de la barre d'étirage (11) que dans le sens d'un axe longitudinal (57) de la barre d'étirage (11), et **en ce que** la barre d'étirage (11) est guidée de façon à pouvoir être positionnée avec ses orifices de passage (53) dans la zone d'une chambre de compression (54).

2. Procédé selon la revendication 1, **caractérisé en ce que** le gaz comprimé, après le moulage du récipient (2) en avant son extraction du moule de soufflage (4), est introduit dans l'espace intérieur (50) de la barre d'étirage.

3. Procédé selon l'une des revendications 1 ou 2, **caractérisé en ce que** l'adduction du gaz comprimé dans l'espace intérieur (50) de la barre d'étirage est commandée par une électrovanne.

4. Dispositif de moulage par soufflage de récipients (2) présentant au moins une station de soufflage (3) avec au moins un moule de soufflage (4) et au moins une barre d'étirage (11), et dont la barre d'étirage (11) est raccordée à un dispositif d'alimentation assurant l'adduction de gaz sous pression et présente, entre sa calotte (51) tournée vers le moule de soufflage (4) et son extrémité (52) opposée au moule de soufflage (4), au moins un orifice de passage (53) débouchant sur un espace intérieur (50) de la barre d'étirage (11) et amenant le gaz sous pression pour le moulage par soufflage, la barre d'étirage (11) étant étanchéifiée par rapport au milieu qui l'entoure par des joints de barre (65, 66) qui, dans le sens de l'axe longitudinal de la barre d'étirage (11), sont espacés et délimitent un espace sous pression, **caractérisé en ce que** la barre d'étirage présente dans sa paroi latérale une pluralité d'orifices de passage (53), ces orifices de passage (53) étant répartis aussi bien le long d'une périphérie de la barre d'étirage (11) que dans le sens d'un axe longitudinal (57) de la barre d'étirage (11), et **en ce que** la barre d'étirage (11) est guidée de façon à pouvoir être positionnée avec ses orifices de passage (53) dans la zone d'une chambre de compression (54).

5. Dispositif selon la revendication 4, **caractérisé en ce que** l'espace intérieur (50) de la barre d'étirage s'étend de la zone des orifices de passage (53) jusqu'à la calotte (51) de la barre d'étirage et **en ce qu'**une partie entre les orifices de passage (53) et une extrémité (52) de barre d'étirage est massive.

6. Dispositif selon l'une des revendications 4 ou 5, **caractérisé en ce que** la chambre de compression (54) est raccordée à une électrovanne assurant l'adduction d'air comprimé.

7. Dispositif selon l'une des revendications 4 à 6, **caractérisé en ce que** l'électrovanne ainsi que la chambre de compression (54) sont liés de façon à former un bloc.

8. Dispositif selon l'une des revendications 4 à 7, **caractérisé en ce que** l'électrovanne est placée de façon à laisser un petit écart par rapport à la chambre de compression (54).

9. Dispositif selon l'une des revendications 4 à 8, **caractérisé en ce qu**'une pièce d'obturation (71) agencée de façon à pouvoir se déplacer par rapport au corps de la chambre de compression (54) est prévue pour étanchéifier au moins temporairement les orifices de passage (53).

10. Dispositif selon la revendication 9, **caractérisé en ce que** la pièce d'obturation (71) entoure la barre d'étirage (11) en forme de manchon sur une partie de sa longueur.

11. Dispositif selon la revendication 9 ou 10, **caractérisé en ce que** la pièce d'obturation (71) est munie d'au moins deux joints de barre (69, 70) pour former un espace étanchéifié.

12. Barre d'étirage pour un dispositif de moulage par soufflage de récipients (2) selon l'une des revendications 4 à 11 avec une chambre de compression (54) pour l'alimentation en air comprimé de la barre d'étirage (11), cette dernière présentant, entre une calotte (51) de la barre d'étirage et son extrémité (52) opposée à la calotte (51), au moins un orifice de passage (53) débouchant sur un espace intérieur (50) de la barre d'étirage (11) et amenant le gaz sous pression pour le moulage par soufflage, **caractérisée en ce que** la barre d'étirage (11) présente dans sa paroi latérale une pluralité d'orifices de passage (53), lesquels sont répartis aussi bien le long d'une périphérie de la barre d'étirage (11) que dans le sens d'un axe longitudinal (57) de la barre d'étirage (11), et **en ce que** la barre d'étirage (11), en une position de service, peut être guidée de façon à être positionnée avec ses orifices de passage (53) dans la zone de la chambre de compression (54) du dispositif.
